# EUROPEAN PATENT SPECIFICATION

(11) **EP 0 837 830 B1**
(45) Date of publication and mention of the grant of the patent: **27.01.1999**
(21) Application number: 95925085.3
(22) Date of filing: 12.07.1995
(51) Int. Cl.: B66F 9/065, B65G 63/00

(54) **CAR FOR LIFTING AND/OR MOVING CONTAINERS**
WAGEN ZUM HEBEN UND/ODER BEWEGEN VON CONTAINERN
WAGON POUR LE LEVAGE ET/OU LE TRANSBORDEMENT DE CONTENEURS

(43) Date of publication of application: 29.04.1998
(73) Proprietor: Mikon Kft, 1123 Budapest (HU)
(72) Inventor: BREZOVITS, László, H-1037 Budapest (HU); VORAGH, Lajos, H-1111 Budapest (HU)
(74) Representative: Viering, Jentschura & Partner
(86) International application number: HU9500035
(87) International publication number: WO9703014

(56) References cited:
- DE-A- 2 855 665
- DE-B- 1 531 990

## Description

The present invention relates to a car for lifting and/or moving containers or other standard loads especially for removing containers from railway cars or other transporting means, rearranging containers, loading railway cars or other transporting means or transferring containers from one transporting means to the other.

Loading, unloading or transferring containers is generally carried out by cranes or other liftingdevices, wherein the containers are caught from one side or from the top.

Moving containers by cranes is going with more and more problem, mainly when moving is carried out at railways with overhead wires. Therefore, special Diesel mechanical locomotives are applied to move the trains to the loading station wherein loading of the containers can be carried out.

This type of loading is rather time consuming and expensive due to the operating and maintaining costs of the cranes, the loading stations, tracks and locomotives. This is the reason that the share of railways in container transport is far below the reasonable volume. Technical development has been limited, however, almost exclusively to lifting devices and other aspects of technological development in connection with loading and unloading have been abandoned.

The DE-B-1,531,990, however, discloses a car for lifting and/or moving containers, comprising a base structure supported on wheels, parallel beams arranged on the base structure and carriages movable on the beams by means of rollers and being provided with means for moving and/or lifting containers.

The car disclosed in the above patent may be used for moving and/or lifting containers only under rather limited circumstances as said means for lifting the containers are arranged to work on both sides on the container to be moved. That means that the car can only be used in cases when single containers are to be moved. As in the practice containers are transported in great amounts, coupled to each other, the problem outlined above cannot be solved by this car.

The object of the present invention is therefore to provide means for loading, unloading or transferring containers in a way which can easily be carried out at railways with overhead system and at the same time to enable loading, unloading, stroring and transferring containers without the need of removing the railway cars from the overhead system. Our aim actually is to make railway transport competitive with respect to the road transport.

Accordingly, object of the present invention is to provide a car for lifting and/or moving containers, comprising a base structure supported on wheels; parallel beams arranged on the base structure; container supports above the beams and carriages movable on the beams by means of rollers and being provided with means for lifting and/or moving containers, wherein said means for lifting and/or moving the containers are foldable below the level of the container supports and the container supports are arranged outside of the path of the carriages.

The car accoding to the invention is preferably provided with railway wheels and supporting rollers below the rail head. Similarly, the carriages may be provided with rollers above and below the heads of said beams.

According to a preferred embodiment, the means for lifting and/or moving the containers are telescopic elements provided with container grips. Slides provided with similar container grips may be movably arranged on said elements.

According to another embodiment the means for lifting and/or moving the containers are forks rotatable around horizontal and vertical pins.

The means for lifting and/or moving the contianers should be provided with actuating means e.g. hyraulic cylinders.

According to a preferred embodiment, the container supports are provided with conveyor rollers.

The car according to the present invention can be produced cheeper than the cranes and alone that is a considerable advantage. An even more important advantage is, however, that there is no need of applying tracks, loading places without overhead systems and Diesel engines for moving the railway cars to the loading place.

The car according to the invention may be used with a lower power consumption than the cranes, can easily be automatized and controlled even in a computerized system.

The car can operate under the overhead system without any danger of accident and no cut-off of the electric system is needed during operation. The speed of the loading is five or six times greater than that of the conventional methods and no air pollution is caused by Diesel engines. The cars are safer than the conventional cranes in view of the dange of accidents as well.

A basic advantage of the present invention is that it opens a new way of loading containers, which certainly can be developed in many ways to improve this kind of loading.

Embodiments of the invention will now be more particularly described by way of example, with reference to the accompanying drawings in which
Figure 1 is a side view of the car according to the invention,
Figure 2 is the front view of the car shown in Figure 1,
Figure 3 shows an embodiment of the means for lifting and/or moving containers,
Figures 4 and 5 illustrates the starting position of a loading process, meanwhile
Figures 6 to 26 show the steps of said loading process.

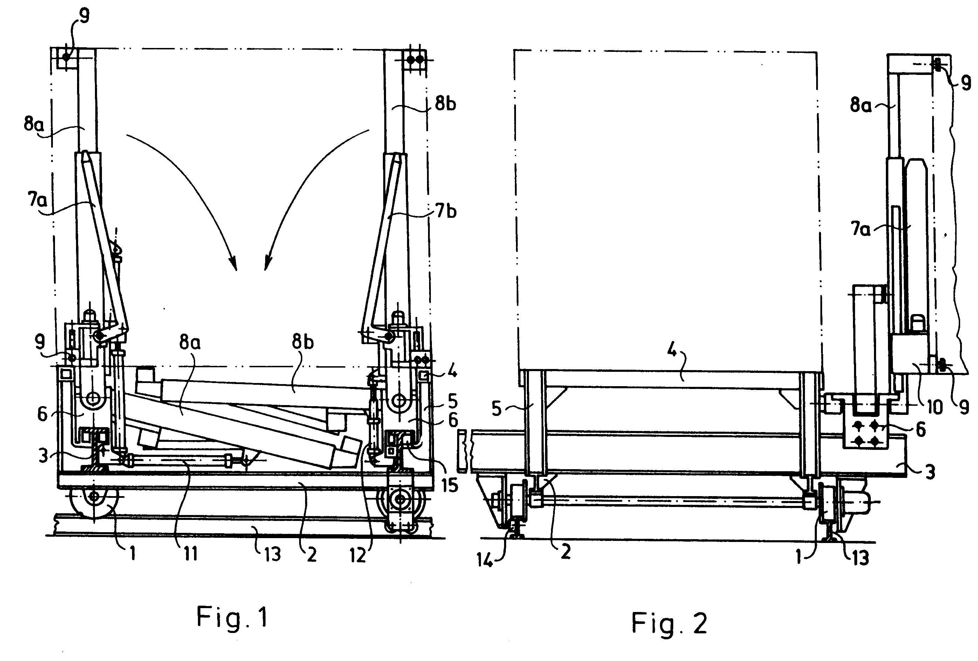

Figures 1 to 3 show an embodiment of the present invention. The car for lifting and/or moving containers comprises a base structure 2 provided with wheels 1 and beams 3. There are container supports 4 arranged on columns 5 above the beams 3.

There are carriages 6 rolling on the beams 3. These carriages 6 are provided with forks 7a and 7b as well as telescopic elements 8a and 8b. Telescopic elements 8a and 8b are provided with container grips 9 at their upper end. Similar container grips 9 are arranged on slides 10 which move along the telescopic elements 8a and 8b. Container grips 9 are fitting in the standard ISO elements of the containers and enable lifting thereof.

Both forks 7a and 7b and telescopic elelements 8a and 8b are provided with actuating means which are in this case hidraulic cylinders 11 and 12.

Forks 7 and telescopic elements 8 can be folded into a horizontal position when they are below the level of the container supports 4. In this way, carriages 6 can move below the containers 16 standing on the supports 4.

The whole car is moving on a track 13 and lower rollers 14 make sure that the car can not be tilted from the track 13. Similar lower rollers 15 are provided on the carriages 6.

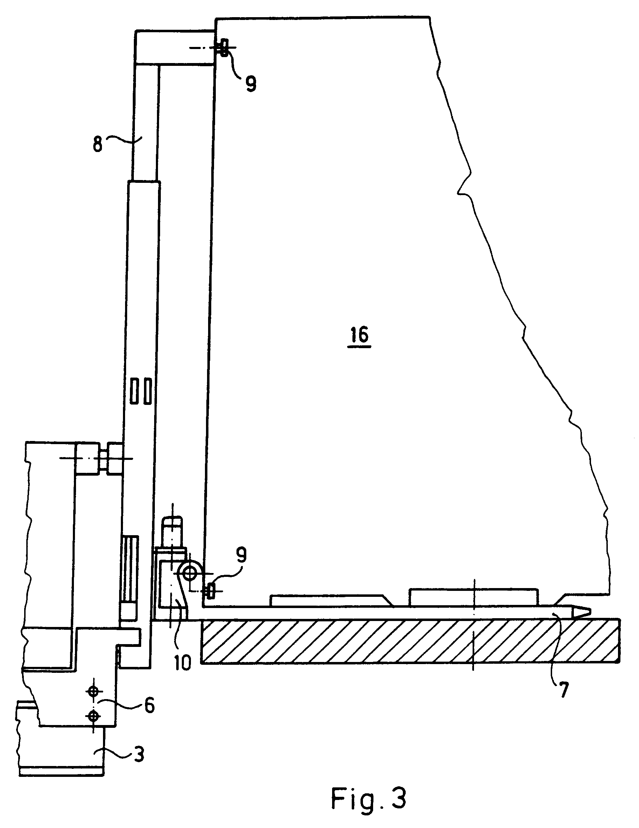

Figure 3 shows how a container 16 can be lifted by container grips 9 arranged at the end of telescopic elements 8 and on slides 10.

Figure 3 also shows that forks 7 on slides 10 can be pushed below the container 16, in order to lift it.

The car for lifting and/or moving containers can be used as follows.

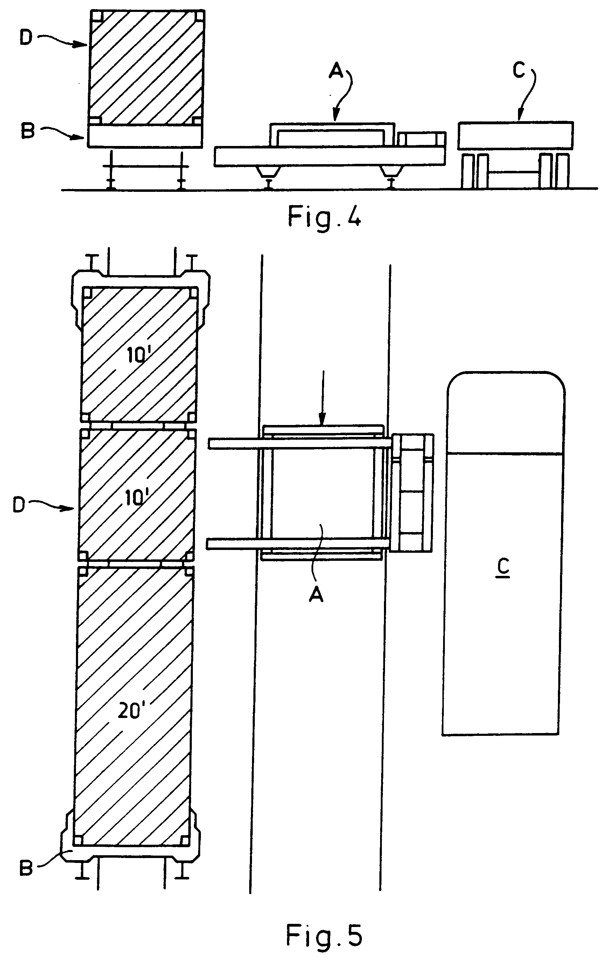

The starting position at loading is shown in Figures 4 and 5 wherein Figure 4 shows a side view and Figure 5 a top view. When the railway car B with containers D achieved its loading position, car A (according to the invention) moves to his first position wherein container grips are in line with the ISO elements on the containers. Preferably, sensor elements are provided for obtaining the correct position.

Truck C is standing on the other side of the track of car A.

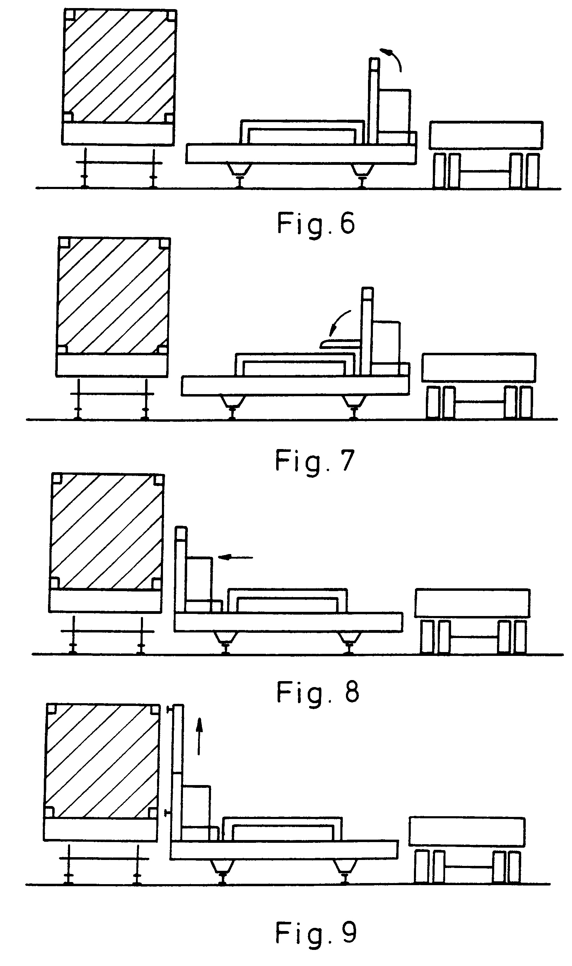

Being in the correct position, telescopic elements are lifted as shown in Figure 6 and forks are lowered as shown Figure 7.

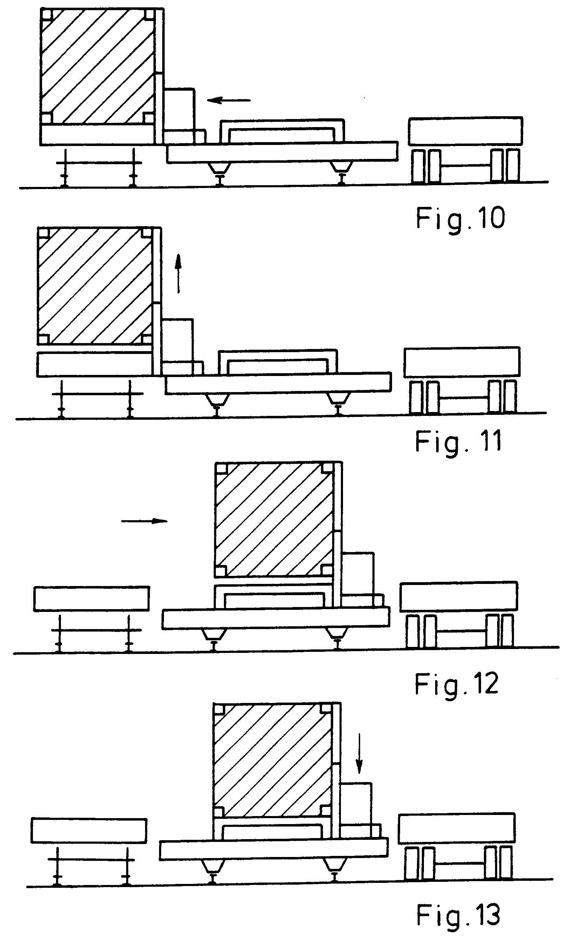

Carriage E then moves toward the containers as shown in Figure 8 and container grip elements are brought to the correct vertical positon to engage ISO elements of the containers (Figure 9). Figure 10 shows the position when the container is caught by the telescopic elements which then lift it as shown in Figure 11.

The container is then moved toward the center of car A (Figure 12) and is arranged on the container supports (Figure 13).

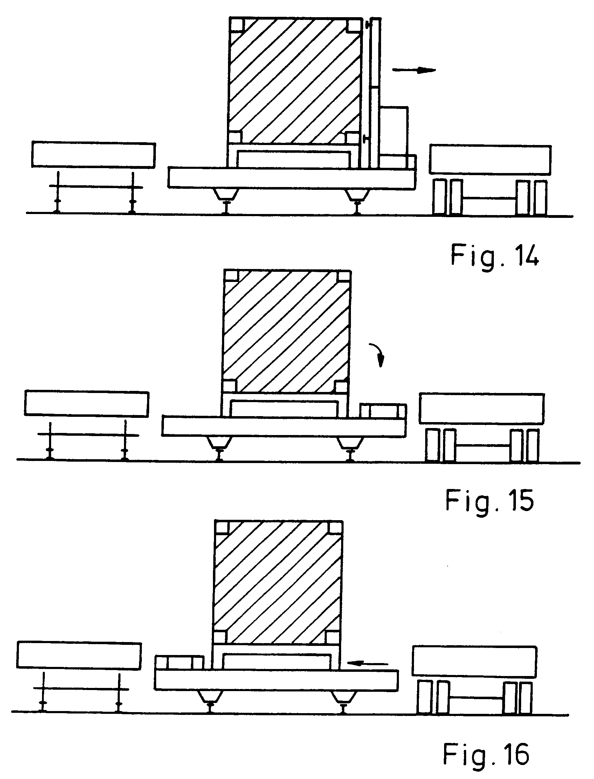

The container is then released from the telescopic elements (Figure 14) which then are folded into horizontal positon, according to Figure 15.

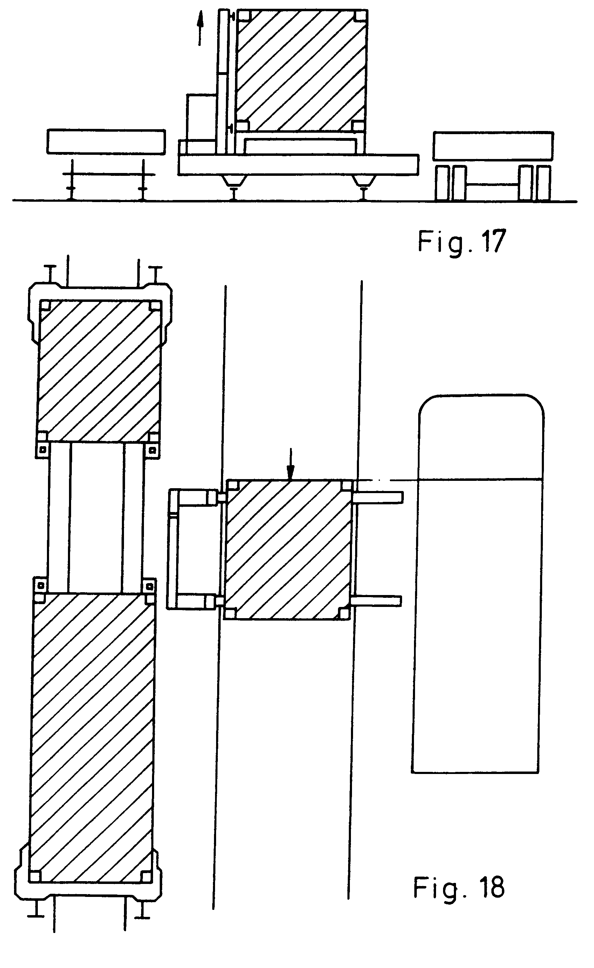

In this positon, they move with the carriage to the other side of the car, below the container (Figure 16) and then telescopic elemlents are opened again as shown in Figure 17.

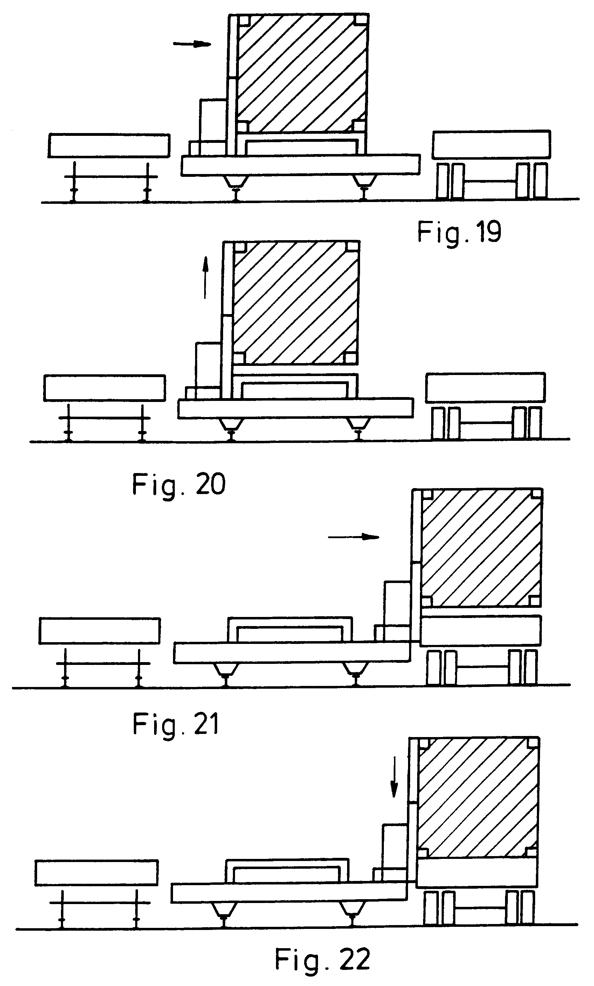

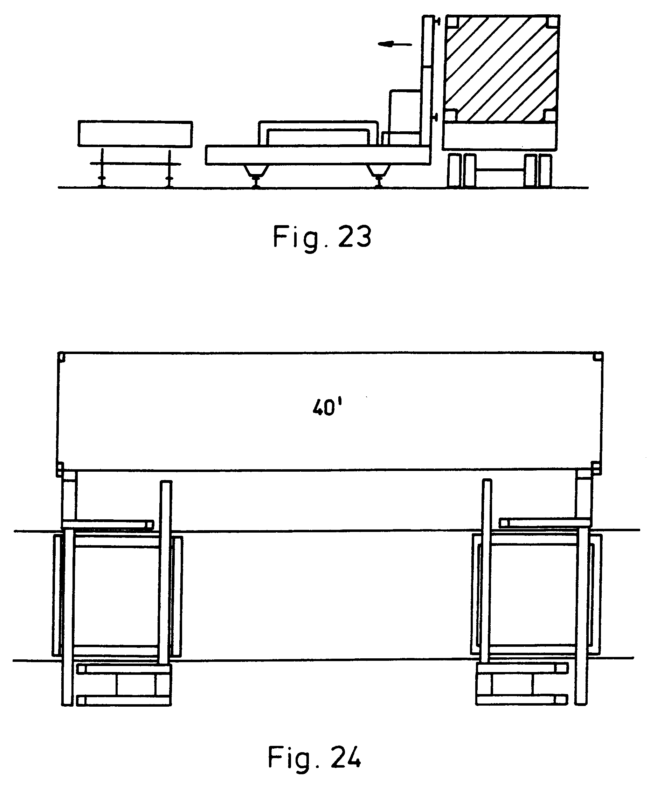

In the meantime, car A is moving to the loading position with respect to truck C (Figure 18). The container is caught by telescopic elements (Figure 19) and lifted (Figure 20). The carriage then moves toward the truck (Figure 21) and loading is carried out (Figure 22). Telescopic elements then release the container and the car is ready to load the next container (Figure 23).

It is to be noted that the means for lifting and/or moving the containers on a car according to the invention can be operated independently and, if needed (see Figure 24), two cars can also be applied in order to move one single container.

The embodiments shown by the way of example illustrate that the car according to the invention can be used for loading, unloading and transferring containers or other standard loads easily and effectively, the means for loading are more simple and cheeper than the conventional ones, producing and operating the system is also cheeper and, at the same time, loading can be carried out with greater speed than before.

## Claims

1. Car for lifting and/or moving containers, comprising
- a base structure (2) supported on wheels (1);
- parallel beams (3) arranged on the base structure (2); and
- carriages (6) movable on the beams (3) by means of rollers (15) and being provided with means for lifting and/or moving containers (16),
**characterized** by container supports (4) above the beams (3) and **in that** said means for lifting and/or moving the containers (16) are foldable below the level of the container supports (4) and the container supports are arranged outside of the path of the carriages (6).

2. The car as claimed in claim 1, **characterized in that** it is provided with railway wheels and rollers (14) below the head section of the rail.

3. The car as claimed in claim 1 or 2, **characterized in that** the carriages (6) are provided with rollers (15) above and below the head of the beams (3).

4. The car as claimed in any of claims 1 to 3, **characterized in that** said means for lifting and/or moving the containers are telescopic elements (8) provided with container grips (9).

5. The car as claimed in claim 4, **characterized in that** there are slides (10) on the telescopic elements (8) movable along said elements and provided with similar container grips (9).

6. The car as claimed in any of claims 1 to 3, **characterized in that** said means for lifting and/or moving containers are forks (7) rotatable around horizontal and vertical pins.

7. The car as claimed in any of claims 1 to 6, **characterized in that** said means for lifting and/or moving containers are provided with actuating means.

8. The car as claimed in claim 7, **characterized in that** said actuating means are hydraulic cylinders (11,12).

9. The car as claimed in claim 7, **characterized in that** the container supports (4) are provided with conveyor rollers.

## Patentansprüche

1. Wagen zum Heben und/oder Bewegen von Containern, der folgendes aufweist:
- ein auf Rädern (1) gehaltenes Untergestell (2),
- auf dem Untergestell (2) parallel angeordnete Träger (3), und
- Wagen (6), die auf den Trägern (3) mittels Rollen (15) verfahrbar sind und mit Mitteln zum Heben und/oder Bewegen von Containern (16) versehen sind,
**gekennzeichnet durch** über den Trägern (3) angeordnete Containeraufnahmen (4) **und dadurch, daß** sich die Mittel zum Heben und/oder Bewegen der Container (16) unter die Höhe der Containeraufnahmen (4) klappen lassen und die Containeraufnahmen (4) außerhalb der Bewegungsbahn der Wagen (6) angeordnet sind.

2. Wagen nach Anspruch 1, **dadurch gekennzeichnet, daß** dieser mit Eisenbahnrädern versehen ist sowie unter dem oberen Abschnitt der Schiene Rollen (14) aufweist.

3. Wagen nach Anspruch 1 oder 2, **dadurch gekennzeichnet, daß** die Wagen (6) über und unter dem Oberteil der Träger (3) mit Rollen (15) versehen sind.

4. Wagen nach irgendeinem der Ansprüche 1 bis 3, **dadurch gekennzeichnet, daß** die Mittel zum Heben und/oder Bewegen der Container Teleskopteile (8) sind, die mit Containergriffen (9) versehen sind.

5. Wagen nach Anspruch 4, **dadurch gekennzeichnet, daß** an den Teleskopteilen (8) Läufer (10) vorgesehen sind, die sich entlang der Teleskopteile bewegen lassen und mit ähnlichen Containergriffen (9) versehen sind.

6. Wagen nach irgendeinem der Ansprüche 1 bis 3, **dadurch gekennzeichnet, daß** die Mittel zum Heben und/oder Bewegen der Container Gabeln (7) sind, die um horizontale und vertikale Zapfen drehbar sind.

7. Wagen nach irgendeinem der Ansprüche 1 bis 6, **dadurch gekennzeichnet, daß** die Mittel zum Heben und/oder Bewegen der Container mit Betätigungseinrichtungen versehen sind.

8. Wagen nach Anspruch 7, **dadurch gekennzeichnet, daß** die Betätigungseinrichtungen Hydraulikzylinder (11, 12) sind.

9. Wagen nach Anspruch 7, **dadurch gekennzeichnet, daß** die Containeraufnahmen (4) mit Transportrollen versehen sind.

## Revendications

1. Wagon pour le levage et/ou le transbordement de conteneurs, comprenant :
une structure de base (2) supportée sur des roues (1) ;
des poutres parallèles (3) disposées sur la structure de base (2) ; et
des chariots (6) qui se déplacent sur les poutres (3) par l'intermédiaire de galets (15) et comportent des moyens de levage et/ou de transbordement de conteneurs (16) ;
caractérisé en ce que des supports de conteneur (4) sont prévus au-dessus des poutres (3), et en ce que lesdits moyens de levage et/ou de transbordement des conteneurs (16) sont repliables au-dessous du niveau des supports de conteneur (4) et les supports de conteneur sont disposés en dehors du chemin des chariots (6).

2. Wagon selon la revendication 1, caractérisé en ce qu'il est pourvu de roues de chemin de fer et de galets (14) au-dessous du profilé de tête du rail.

3. Wagon selon la revendication 1 ou 2, caractérisé en ce que les chariots (6) sont pourvus de galets (15) au-dessus et au-dessous de la tête des poutres (3).

4. Wagon selon une quelconque des revendications 1 à 3, caractérisé en ce que lesdits moyens de levage et/ou de transbordement des conteneurs sont des éléments télescopiques (8) comportant des moyens (9) de prise de conteneur.

5. Wagon selon la revendication 4, caractérisé en ce que des coulisseaux (10) sont prévus sur les éléments télescopiques (8), ils peuvent se déplacer le long desdits éléments et ils comportent des moyens similaires (9) de prise de conteneur.

6. Wagon selon une quelconque des revendications 1 à 3, caractérisé en ce que lesdits moyens de levage et/ou de transbordement des conteneurs sont des fourches (7) qui peuvent pivoter autour d'axes horizontaux et verticaux.

7. Wagon selon une quelconque des revendications 1 à 6, caractérisé en ce que lesdits moyens de levage et/ou de transbordement des conteneurs sont pourvus de moyens de manoeuvre.

8. Wagon selon la revendication 7, caractérisé en ce que lesdits moyens de manoeuvre sont des vérins hydrauliques (11,12).

9. Wagon selon la revendication 7, caractérisé en ce que les supports de conteneur (4) sont pourvus de rouleaux de convoyeur.
